# EUROPÄISCHE PATENTANMELDUNG

(11) **EP 3 627 016 A1**
(43) Veröffentlichungstag der Anmeldung: **25.03.2020**
(21) Anmeldenummer: 18465575.1
(22) Anmeldetag: 19.09.2018
(51) Int. Cl.: F16K 11/04, F02D 9/04, F02D 41/00

(54) **VENTIL**

(71) Anmelder: Continental Automotive GmbH, 30165 Hannover (DE)
(72) Erfinder: Ionica, Costinel Alexandru, 220215 Dr. Tr. Severin (RO)

(57) **Zusammenfassung**

Ein Ventil zum Öffnen und Schließen einer Abgasleitung weist auf:
- ein Gehäuse (1),
- einen in dem Gehäuse (1) angeordneten Stößel (4), der an einem ersten Ende (201) mit einem Antrieb koppelbar ist und ausgebildet ist entlang einer Längsachse (205) des Stößels (4) bewegt zu werden,
- einen im Gehäuse (1) angeordneten Ventilsitz (9), der eine Öffnung (11) begrenzt, und
- einen Schließkörper (10), der mit dem Stößel (4) verbunden ist, so dass der Schließkörper (10) mittels einer Bewegung des Stößels (4) zwischen einer Offenstellung, in der die Öffnung (11) freigegeben ist, und einer Schließstellung verstellbar ist, in der der Schließkörper (10) an dem Ventilsitz (9) anliegt und die Öffnung (11) abdichtet,
- eine Lagerbuchse (200) zum Führen des Stößels (4), wobei ein dem ersten Ende (201) gegenüberliegendes zweites Ende (202) des Stößels (4) in der Lagerbuchse (200) angeordnet ist, und wobei die Lagerbuchse (200) ein elastisches Element (203) aufweist, das eine Kraft (204) quer zu Längsachse (205) auf den Stößel (4) auswirkt.

## Beschreibung

Es wird ein Ventil zum Öffnen und Schließen einer Abgasleitung angegeben.

In Kraftfahrzeugen werden Ventile zum Öffnen und Schließen einer Abgasleitung eingesetzt. Wichtig für die Funktion solcher Ventile ist die Dichtheit, mit der das Ventil die Leitung verschließen kann. Gerade bei Gasen ist das Erreichen einer geringen Leckrate mit hohem Aufwand verbunden. Der Antrieb eines Stößels des Ventils wird typischerweise von einem Elektromotor und einem Getriebe gebildet. Das Getriebe dient dazu, die Drehbewegung des Elektromotors in eine translatorische Bewegung umzuwandeln, damit der mit dem Getriebe verbundene Stößel linear bewegt werden kann. Der Stößel muss hierzu axial geführt werden.

Es ist wünschenswert, ein Ventil anzugeben, das einfach und zuverlässig ist.

Gemäß einer Ausführungsform weist ein Ventil zum Öffnen und Schließen einer Abgasleitung ein Gehäuse auf. Das Ventil weist in dem Gehäuse angeordneten Stößel auf. Der Stößel ist an einem ersten Ende mit einem Antrieb koppelbar. Der Stößel ist ausgebildet, entlang einer Längsachse des Stößels bewegt zu werden. Das Ventil weist einen im Gehäuse angeordneten Ventilsitz auf. Der Ventilsitz begrenzt eine Öffnung. Das Ventil weist einen Schließkörper auf. Der Schließkörper ist mit dem Stößel verbunden. Der Schließkörper ist zwischen einer Offenstellung und einer Schließstellung verstellbar. In der Offenstellung ist die Öffnung freigegeben. In der Schließstellung liegt der Schließkörper an dem Ventilsitz an dichtet die Öffnung ab. Das Ventil weist eine Lagerbuchse zum Führen des Stößels auf. Ein dem ersten Ende gegenüberliegendes zweites Ende des Stößels ist in der Lagerbuchse angeordnet. Die Lagerbuchse weist ein elastisches Element auf. Das elastische Element wirkt eine Kraft quer zu Längsachse auf den Stößel aus.

Die Lagerbuchse ermöglicht eine relative Bewegung des Stößels zur Lagerbuchse entlang der Längsrichtung. Der Stößel ist in der Lagerbuchse geführt. Die Lagerbuchse ermöglicht eine axiale Bewegung und führt den Stößel in radialer Richtung. Das elastische Element ermöglicht auch eine leichte Schiefstellung des Stößels. Radialkräfte werden im Betrieb von der Lagerbuchse aufgenommen. Die Lagerbuchse und das Ventil mit der Lagerbuchse sind leicht zusammenzubauen und insbesondere mit wenigen Verfahrensschritten zusammenbaubar. Die Lagerbuchse ermöglicht eine Bewegung des Stößels mit vergleichsweise geringer Reibung. Die Lagerbuchse ist wenig anfällig für Toleranzen des Stößels.

Gemäß zumindest einer Ausführungsform weist das elastische Element eine Feder auf, um die Kraft auszuwirken. In der Lagerbuchse ist die Feder angeordnet, beispielsweise eine Schraubenfeder. Die Schraubenfeder ist insbesondere radial zum Stößel ausgerichtet. Die Feder ist ausgebildet, die Kraft in radialer Richtung auf den Stößel auszuwirken.

Gemäß einer Ausführungsform weist das elastische Element eine Kugel auf, die zwischen der Feder und dem Stößel angeordnet ist. Die Feder ist ausgebildet, die Kugel in radialer Richtung gegen den Stößel zu drücken. Die Kugel ermöglicht eine reibungsarme Relativbewegung des Stößels zur Lagerbuchse. Es treten wenig oder gar keine Gleitreibungen auf. Der Kontakt zwischen dem Stößel und der Lagerbuchse ist mittels der Kugel realisiert. Somit treten im Betrieb Rollreibungen auf, die geringer sind als herkömmliche Gleitreibungen.

Gemäß einer Ausführungsform weist die Lagerbuchse ein Lagergehäuse auf. Das Lagergehäuse umgibt eine erste Ausnehmung entlang der Längsachse. Das Lagergehäuse umgibt eine zweite Ausnehmung quer zu Längsachse. Der Stößel ist in der ersten Ausnehmung angeordnet. Das elastische Element ist in der zweiten Ausnehmung angeordnet. Somit ist die Lagerbuchse als eigenständiges Bauteil realisierbar. Das Lagergehäuse ist insbesondere separat zum Gehäuse des Ventils ausgebildet.

Gemäß einer Ausführungsform durchdringt die zweite Ausnehmung eine Gehäusewand des Lagergehäuses vollständig. Die Lagerbuchse weist eine Abdeckung für die zweite Ausnehmung auf. Von innen nach außen ist in der zweiten Ausnehmung zunächst die Kugel angeordnet, dann die Feder und dann die Abdeckung. Die Abdeckung bedeckt die zweite Ausnehmung nach außen. Dadurch ist die Feder vorgespannt. Somit ist eine einfache Herstellung möglich und die Lagerbuchse als separates Bauteil ausbildbar.

Gemäß einer Ausführungsform weist die zweite Ausnehmung in Richtung nach innen eine Verjüngung auf, um eine Bewegung des elastischen Elements in Richtung nach innen zu begrenzen. Somit wird vermieden, dass auch wenn der Stößel nicht in der ersten Ausnehmung angeordnet ist, die Kugel aus der zweiten Ausnehmung herausfallen kann. Dadurch werden ein einfacher Transport und eine einfache Montage des Ventils ermöglicht.

Gemäß einer Ausführungsform weist das Gehäuse eine Aufnahme für die Lagerbuchse auf. Die Lagerbuchse ist in der Aufnahme fixiert. Die Lagerbuchse ist somit stabil relativ zu den übrigen Bauteilen des Ventils gehalten. Die Führung des Stößels ist somit am Ventil stabil ausgebildet.

Gemäß einer Ausführungsform weist das Gehäuse eine Verriegelung für die Lagerbuchse auf, um eine axiale Bewegung der Lagerbuchse relativ zu dem Gehäuse zu blockieren. Die Verriegelung ist mittels einer Materialverformung des Gehäuses ausgebildet. Beispielsweise ist das Gehäuse nach dem die Lagerbuchse in der Aufnahme angeordnet wurde plastisch verformt, um ein axiales Verschieben der Lagerbuchse zu blockieren.

Gemäß einer Ausführungsform ist die Aufnahme in einem Gehäusedeckel des Gehäuses angeordnet, Der Gehäusedeckel ist an einem Gehäusekörper des Gehäuses fixiert. Somit ist eine einfache und stabile Anordnung der Lagerbuchse realisiert.

Gemäß zumindest einer Ausführungsform weist die Lagerbuchse eine Mehrzahl von elastischen Elementen auf. Die elastischen Elemente sind insbesondere alle gleichartig aufgebaut. Beispielsweise weist die Lagerbuchse vier elastische Elemente auf, von denen jeweils zwei gegenüber einander angeordnet sind. Auch mehr oder weniger als vier Lagerbuchsen sind möglich.

Das beschriebene Ventil eignet sich insbesondere für Linearventile, bei denen der Stößel entlang einer Richtung, insbesondere seiner Längsrichtung, linear bewegt wird. Weiterhin kann das Ventil auch einen weiteren Ventilsitz mit einer weiteren Ventilöffnung aufweisen, (Doppellinearventil), die gleichzeitig zur ersten Ventilöffnung durch die Stößelbewegung mittels einer entsprechenden Schließkörpers verschlossen oder freigegeben werden kann. Das Ventil kann also als Doppellinearventil ausgebildet sein oder mit nur einem einzigen Schließkörper als Einfachlinearventil.

Beispielsweise ist das Ventil in einem Abgasrückführsystem eines Kraftfahrzeugs einsetzbar, um die Abgasleitung des Kraftfahrzeugs zu öffnen und zu schließen. Beispielsweise weist ein Abgasrückführsystem eines Kraftfahrzeugs das Ventil auf.

Weitere Vorteile, Merkmale und Weiterbildungen ergeben sich aus den nachfolgenden, in Verbindung mit den Figuren erläuterten Beispielen. Gleiche, gleichartige oder gleichwirkende Elemente sind figurenübergreifend mit gleichen Bezugszeichen versehen.

Es zeigen:
- Figur 1: eine schematische Schnittansicht eines exemplarischen Ventils,
- Figur 2: eine schematische Schnittansicht eines Ventils gemäß einem Ausführungsbeispiel der Erfindung,
- Figuren 3 bis 5: jeweils eine schematische Darstellung einer Lagerbuchse des Ventils gemäß Figur 2, und
- Figuren 6 bis 8: jeweils eine schematische Schnittansicht einer Lagerbuchse und eines Gehäusedeckels des Ventils gemäß Figur 2.

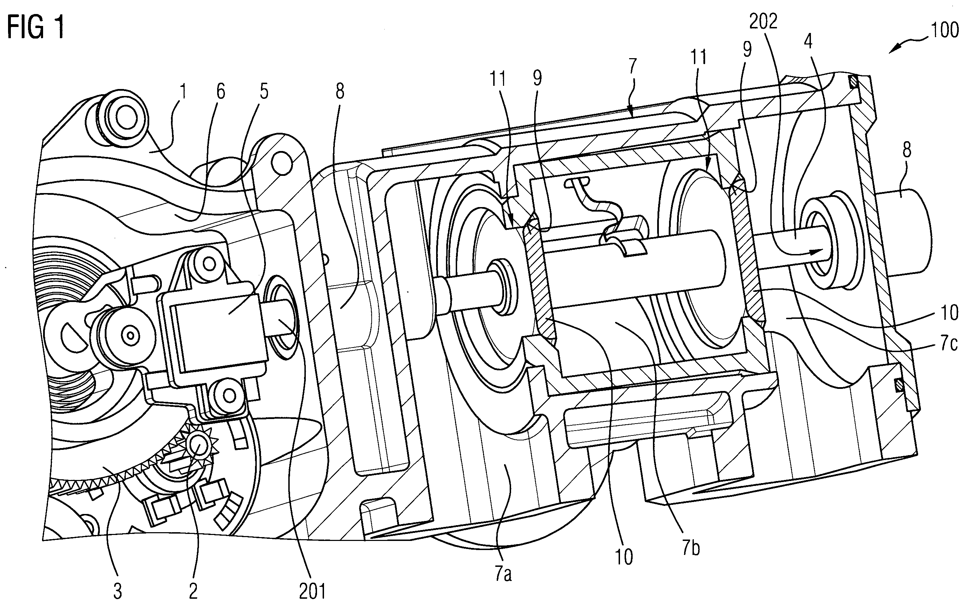

Figur 1 zeigt ein Ventil 100 gemäß einem Ausführungsbeispiel zum Öffnen und Schließen einer Abgasleitung. Das Ventil 100 in Figur 1 weist ein Gehäuse 1 auf, in dem ein Elektromotor 2 angeordnet ist. Mittels eines Getriebes 3 wird die Drehbewegung des Elektromotors 2 in eine lineare Bewegung eines Stößels 4 umgewandelt. Der Stößel 4 ist an einem ersten Ende 201 mit dem Getriebe koppelbar. Am Getriebe 3 ist ein Sensor 5 angeordnet, der mit einem am Stößel 4 befestigten Magneten zusammenwirkt. Der Stößel 4 erstreckt sich von der Getriebekammer 6 bis in eine Ventilkammer 7, wobei der Stößel 4 an zwei Stellen 8 gelagert ist. Die Ventilkammer 7 besteht aus drei hintereinander liegenden Teilkammern 7a, 7b, 7c, die jeweils durch einen Ventilsitz 9 voneinander getrennt sind. Zwei Schließkörper 10 sind so auf dem Stößel 4 angeordnet, dass sie sich bei einer Bewegung des Stößels 4 entlang einer Längsachse 205 des Stößels 4 an den jeweiligen Ventilsitz 9 anlegen und eine Öffnung 11 abdichten oder vom Ventilsitz 9 wegbewegen und die Öffnung 11 somit freigeben, dass ein Gas von einer Ventilkammer 7 in die andere strömen kann. Im Folgenden wird ein Ventil 100 gemäß einem Ausführungsbeispiel der Erfindung beschrieben, das eine Weiterentwicklung der Lagerung an einem dem Antrieb abgewandten zweiten Ende 202 des Stößels 4 aufweist. Im Übrigen kann das Ventil 100 die Merkmale der anhand von der Figur 1 beschriebenen Ausgestaltung aufweisen. Es sei jedoch darauf hingewiesen, dass das in Figur 1 beschriebene Ventil 100 exemplarisch zu verstehen ist und alternativ auch anderweitige Ausgestaltungen haben kann, ohne dass sich Einschränkungen für die nachfolgende Beschreibung des Ausführungsbeispiels der Erfindung ergeben.

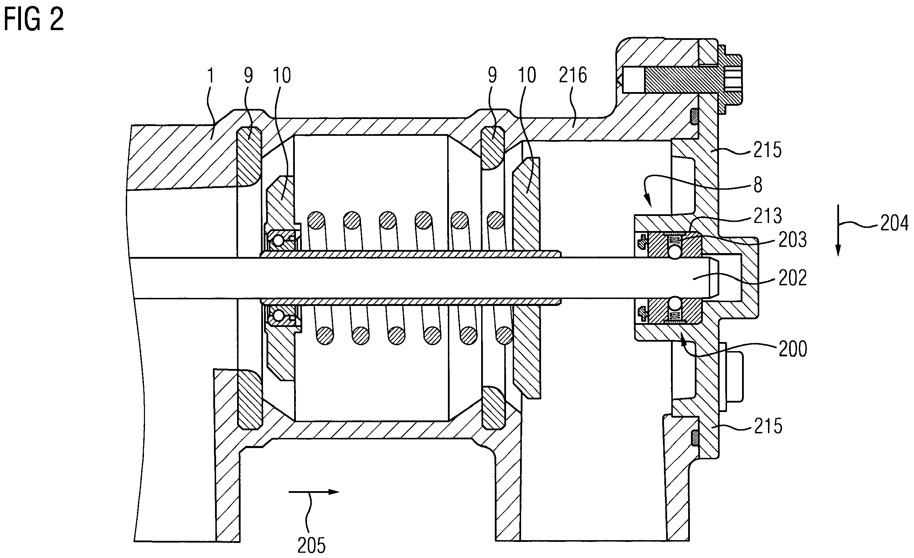

Figur 2 zeigt eine Schnittansicht des Ventils 100. Der Stößel 4 mit zwei Schließkörpern 10 ist in dem Gehäuse 1 angeordnet und axial entlang der Längsachse 205 beweglich. Das Gehäuse 1 weist einen Gehäusekörper 216 auf, in dem zwei Ventilsitze 9 angeordnet sind. An der dem Elektromotor 2 abgewandten Seite ist der Stößel 4 an der Stelle 8 mittels einer Lagerbuchse 200 gehalten und geführt. Die Lagerbuchse 200 ermöglicht die axiale Bewegung des Stößels 4 relativ zu dem Gehäuse 1 und relativ zu der Lagerbuchse 200. Die Lagerbuchse 200 ist ausgebildet, radiale Kräfte quer zur Längsachse 205 aufzunehmen. Hierfür weist die Lagerbuchse 200 insbesondere ein elastisches Element 203 oder mehrere elastische Elemente 203 auf. Das elastische Element 203 ist in direktem Kontakt mit dem Stößel 4. Das elastische Element 203 wirkt eine Kraft 204 in radialer Richtung auf den Stößel 4 aus. Somit ist der Stößel 4 an seinem zweiten Ende 202 in der Lagerbuchse radial gehalten. Das zweite Ende 202 ist dem ersten Ende 201 abgewandt.

Gemäß dem dargestellten Ausführungsbeispiel weist das Gehäuse 1 einen Gehäusedeckel 215 auf. Der Gehäusedeckel ist an dem Gehäusekörper 216 fixierbar, um die Ventilkammern 7 auszubilden. Die Lagerbuchse 200 ist in einer Aufnahme 213 fixiert, die von dem Gehäusedeckel 215 ausgebildet ist.

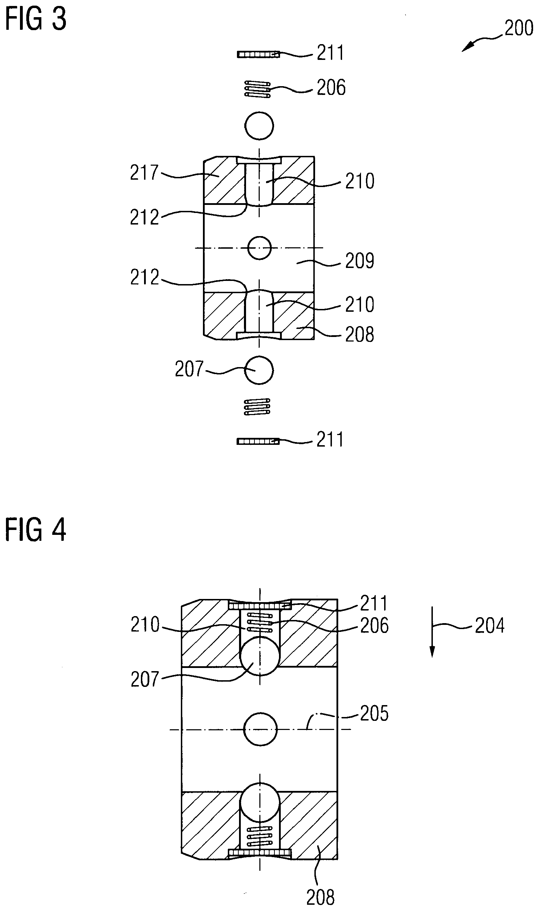

Figur 3 zeigt Bauteile der Lagerbuchse 200 gemäß einem Ausführungsbeispiel. Die Lagerbuchse 200 weist ein Lagergehäuse 208 auf. Das Lagergehäuse 208 ist insbesondere separat zum Gehäuse 1 ausgebildet. Das Lagergehäuse 208 weist eine erste Ausnehmung 209 auf. Die erste Ausnehmung 209 erstreckt sich entlang der Längsrichtung 205. Die erste Ausnehmung 209 ist ausgebildet, den Stößel 4 aufzunehmen. Im Betrieb bewegt sich der Stößel 4 in der ersten Ausnehmung 209 entlang der Längsrichtung 205.

Das Lagergehäuse 208 weist eine zweite Ausnehmung 210 auf. Die zweite Ausnehmung 210 ist quer zur Längsachse 205 ausgebildet. Im dargestellten Ausführungsbeispiel weist das Lagergehäuse 208 vier zweite Ausnehmungen 210 auf. Es sind auch mehr oder weniger als vier zweite Ausnehmungen 210 möglich. Die zweite Ausnehmung 210 erstreckt sich jeweils durch eine Gehäusewand 217 von außen nach innen zur ersten Ausnehmung 209.

Am Übergang der zweiten Ausnehmung 210 zur ersten Ausnehmung 209 weist die zweite Ausnehmung 210 eine Verjüngung 212 auf. Der Radius der zweiten Ausnehmung 210 verringert sich an der Verjüngung 212.

Die Lagerbuchse 200 weist eine Kugel 207 auf. Insbesondere weist die Lagerbuchse 200 je zweite Ausnehmung 210 eine Kugel 207 auf. Die Kugel ist in der zweiten Ausnehmung 210 anordbar.

Die Lagerbuchse 200 weist eine Feder 206 auf. Die Feder ist insbesondere eine Spiralfeder. Die Lagerbuchse 200 weist insbesondere je Kugel 207 eine Feder 206 auf. Die Feder 206 ist in der zweiten Ausnehmung 210 anordbar.

Die Lagerbuchse 200 weist eine Abdeckung 211 auf. Insbesondere weist die Lagerbuchse 200 je zweiter Ausnehmung 210 eine eigene Abdeckung 211 auf. Die Abdeckung ist dazu ausgebildet, die zweite Ausnehmung 210 nach außen abzuschließen.

Figur 4 zeigt eine schematische Darstellung der Lagerbuchse 200 im betriebsfertigen Zustand. Die Kugel 207 ist in der zweiten Ausnehmung 210 angeordnet, so dass sie zumindest teilweise in die erste Ausnehmung 209 ragt. Ein Eindringen der Kugel 207 aus der zweiten Ausnehmung 210 vollständig in die erste Ausnehmung 209 ist mittels der Verjüngung 211 blockiert. Die Feder 206 ist zwischen der Abdeckung 211 und der Kugel 207 angeordnet und wirkt so die Kraft 204 auf die Kugel in Richtung der Innenseite des Lagergehäuses 208. Die Abdeckung 211 ist mit dem Lagergehäuse 208 fest verbunden, so dass ein Vorspannen der Feder 206 zwischen der Abdeckung 211 und der Kugel 207 möglich ist.

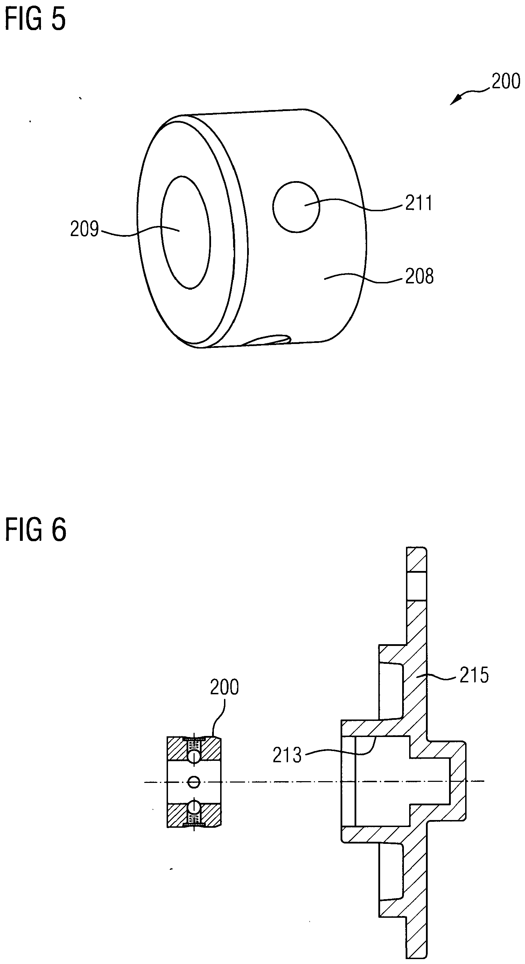

Figur 5 zeigt eine perspektivische Darstellung der Lagerbuchse 200. Die Lagerbuchse 200 weist die Form eines Hohlzylinders auf. Die zweiten Ausnehmungen 210 sind nach außen mit jeweiligen Abdeckungen 211 abgeschlossen. Mittig ist die erste Ausnehmung 209 vorgesehen.

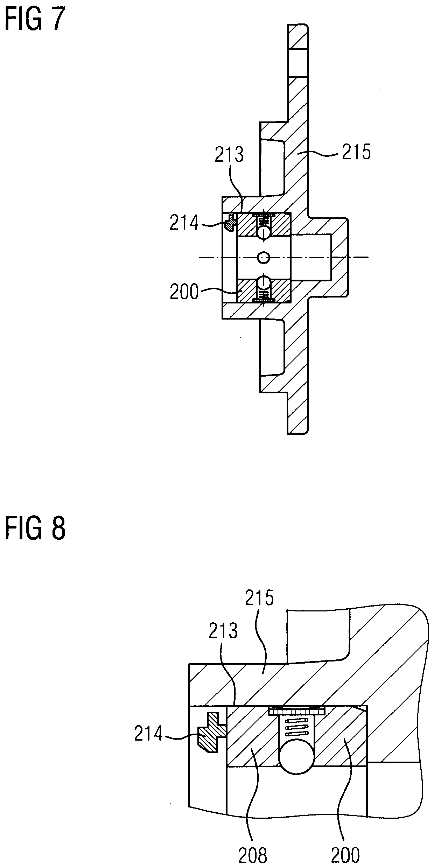

Figur 6 zeigt die Lagerbuchse 200 sowie die zugehörige Aufnahme 213 im Gehäusedeckel 215. Der Außenradius der Lagerbuchse 200 ist insbesondere zumindest leicht größer als der Innendurchmesser der Aufnahme 213. Somit ist die Lagerbuchse 200 mittels eines Verpressens in der Aufnahme 213 fixierbar, wie insbesondere in Figur 7 dargestellt ist. die Lagerbuchse 200 ist somit an dem Gehäusedeckel 215 und damit am Gehäuse 1 mittels einer Presspassung gehalten.

Zusätzlich ist gemäß Ausführungsbeispielen eine Verriegelung 214 vorgesehen, wie insbesondere in Figur 8 dargestellt. Die Verriegelung ist insbesondere mittels eines plastischen Verformens eines Teils des Gehäusedeckels 215 ausgebildet. beispielsweise wird ein Teil des Materials des Gehäusedeckels 215 so verformt, dass es radial über das Lagergehäuse 208 der Lagerbuchse 200 vorspringt. Die Verriegelung 214 bildet einen Anschlag für das Lagergehäuse 8 in axialer Richtung. Somit ist eine Bewegung der Lagerbuchse 200 in axialer Richtung blockiert.

Die Lagerbuchse 200 wirkt mittels der elastischen Elemente 203 stetig die Kraft 204 in radialer Richtung auf den Stößel 4 ein. Somit ist der Stößel 4 in radialer Richtung verlässlich gehalten und geführt. Es müssen kein Spiel und keine Toleranzen berücksichtigt werden, um das zweite Ende 202 des Stößels 4 zu lagern. Auch leichte Neigungen und/oder Verkippungen des Stößels 4 können von der Lagerbuchse 200 aufgenommen werden, da die elastischen Elemente 203 in radialer Richtung quer zur Längsachse 205 beweglich und elastisch sind.

Das Ventil 100 mit der Lagerbuchse 200 ermöglicht eine Lagerung des zweiten Endes 202 mit vergleichsweise wenig Teilen und somit mit einer vergleichsweise einfachen und damit schnellen Montage. Die Lagerung an der Stelle 8 auf der dem Elektromotor 2 und dem Getriebe 3 abgewandten Seite ist relativ zu dem Gehäuse 1 fixiert. Im Betrieb treten an der Kugel 207 hauptsächlich Rollreibungen auf und Gleitreibungen werden vermieden. Somit ist ein verlässlicher Betrieb möglich.

Die Kugel 207 ist insbesondere eine Metallkugel. Die Abdeckung 211 ist insbesondere mittels einer Presspassung mit dem Lagergehäuse 208 verbunden. Mittels der Feder 206 wird die Kugel 207 an die Innenseite der zweiten Ausnehmung 210 in Richtung der ersten Ausnehmung 209 gedrückt und von der Verjüngung 212 gehalten. Es ist möglich, die Lagerbuchse 200 getrennt von den übrigen Bauteilen zunächst am Gehäusedeckel 215 zu fixieren und nachfolgend den Gehäusedeckel 215 gemeinsam mit der Lagerbuchse 200 mit den restlichen Bauteilen des Ventils 100 zu verbinden. Dabei wird der Stößel 4 in die erste Ausnehmung 209 eingebracht und gelangt in Kontakt mit den Kugeln 207. Im Betrieb sind die Kugeln 207 radial beweglich. Insbesondere werden die Kugeln 207 radial in Abhängigkeit einer Abweichung der Längsachse 205 des Stößels 4 und einer Längsachse der ersten Ausnehmung 209 bewegt. Eine Bewegung in Richtung der Abdeckung 209 drückt die Feder 20 zusammen und kompensiert dadurch die Abweichung.

Die Lagerbuchse 200 ist einfach herstellbar und weist dabei eine verlässliche Kompensation von Achsabweichungen im Betrieb auf.

## Patentansprüche

1. Ventil zum Öffnen und Schließen einer Abgasleitung, aufweisend:
- ein Gehäuse (1),
- einen in dem Gehäuse (1) angeordneten Stößel (4), der an einem ersten Ende (201) mit einem Antrieb koppelbar ist und ausgebildet ist entlang einer Längsachse (205) des Stößels (4) bewegt zu werden,
- einen im Gehäuse (1) angeordneten Ventilsitz (9), der eine Öffnung (11) begrenzt, und
- einen Schließkörper (10), der mit dem Stößel (4) verbunden ist, so dass der Schließkörper (10) mittels einer Bewegung des Stößels (4) zwischen einer Offenstellung, in der die Öffnung (11) freigegeben ist, und einer Schließstellung verstellbar ist, in der der Schließkörper (10) an dem Ventilsitz (9) anliegt und die Öffnung (11) abdichtet,
- eine Lagerbuchse (200) zum Führen des Stößels (4), wobei ein dem ersten Ende (201) gegenüberliegendes zweites Ende (202) des Stößels (4) in der Lagerbuchse (200) angeordnet ist, und wobei die Lagerbuchse (200) ein elastisches Element (203) aufweist, das eine Kraft (204) quer zu Längsachse (205) auf den Stößel (4) auswirkt.

2. Ventil nach Anspruch 1, bei dem das elastische Element (203) eine Feder (206) aufweist, um die Kraft (204) auszuwirken.

3. Ventil nach Anspruch 2, bei dem das elastische Element (203) eine Kugel (207) aufweist, die zwischen der Feder (206) und dem Stößel (4) angeordnet ist.

4. Ventil nach einem der vorhergehenden Ansprüche, bei dem die Lagerbuchse (200) ein Lagergehäuse (208) aufweist, das eine erste Ausnehmung (209) entlang der Längsachse (205) umgibt und das eine zweite Ausnehmung (210) quer zu Längsachse (205) umgibt, wobei der Stößel (4) in der ersten Ausnehmung (209) angeordnet ist und das elastische Element (203) in der zweiten Ausnehmung (210) angeordnet ist.

5. Ventil nach den Ansprüchen 2 bis 4, bei dem die zweite Ausnehmung (210) eine Gehäusewand (217) des Lagergehäuses (208) vollständig durchdringt, wobei die Lagerbuchse (200) eine Abdeckung (211) für die zweite Ausnehmung (210) aufweist, wobei von innen nach außen in der zweiten Ausnehmung (210) zunächst die Kugel (207) angeordnet ist, dann die Feder (206) und dann die Abdeckung (211), die die zweite Ausnehmung (210) nach außen bedeckt und die Feder (206) vorspannt.

6. Ventil nach Anspruch 4 oder 5, bei dem die zweite Ausnehmung (210) in Richtung nach innen eine Verjüngung (212) aufweist, um eine Bewegung des elastischen Elements (203) in Richtung nach innen zu begrenzen.

7. Ventil nach einem der vorhergehenden Ansprüche, bei dem das Gehäuse (1) eine Aufnahme (213) für die Lagerbuchse (200) aufweist, und die Lagerbuchse (200) in der Aufnahme (213) fixiert ist.

8. Ventil nach Anspruch 7, bei dem das Gehäuse (1) eine Verriegelung (214) für die Lagerbuchse (200) aufweist, um eine axiale Bewegung der Lagerbuchse (200) relativ zu dem Gehäuse (1) zu blockieren, wobei die Verriegelung (214) mittels einer Materialverformung des Gehäuses (1) ausgebildet ist.

9. Ventil nach Anspruch 7 oder 8, bei dem die Aufnahme (213) in einem Gehäusedeckel (215) des Gehäuses (1) angeordnet ist, der an einem Gehäusekörper (216) des Gehäuses (1) fixiert ist.

10. Ventil nach einem der vorhergehenden Ansprüche, bei dem die Lagerbuchse (200) eine Mehrzahl von elastischen Elementen (203) aufweist.
